# EUROPÄISCHE PATENTSCHRIFT

(11) **EP 2 105 644 B1**
(45) Veröffentlichungstag und Bekanntmachung des Hinweises auf die Patenterteilung: **14.07.2010**
(21) Anmeldenummer: 08005643.5
(22) Anmeldetag: 26.03.2008
(51) Int. Cl.: F16L 23/00, F16L 23/18, F16J 15/12

(54) **Flanschdichtung**
Flange seal
Garniture d'étanchéité

(43) Veröffentlichungstag der Anmeldung: 30.09.2009
(73) Patentinhaber: Klinger AG, 6300 Zug (CH)
(72) Erfinder: Eisenach, Frank-Peter, 42929 Wermelskirchen (DE)
(74) Vertreter: Sparing Röhl Henseler Patentanwälte European Patent Attorneys

(56) Entgegenhaltungen:
- EP-A- 1 707 862
- DE-U1- 29 901 351
- GB-A- 816 559

## Beschreibung

Die Erfindung betrifft eine Flanschdichtung nach dem Oberbegriff des Anspruchs 1.

Aus EP 1 707 862 A1 ist eine derartige Flanschdichtung bekannt, die zwei Ringe aus einem gummielastischen Werkstoff umfasst, die quer zur Ringachse keilförmig ausgebildet sind. Einfach durch Verdrehen der beiden Ringe gegeneinander lässt sich die Position derselben zueinander kontinuierlich verstellen zwischen einer Position mit einem Spreizwinkel von 0° und einer Position mit einem maximalen Spreizwinkel. Fluchtfehler bei Flanschschiefstellungen sind so durch die Dichtung beim Abdichten ausgleichbar. Zur Verbesserung der Stabilität der Flanschdichtung gegen ein Herauspressen aus dem Dichtspalt während des Einspannens sind die beiden Ringe mit metallischen Verstärkungseinlagen versehen, die in Form von Stahlringeinlagen oder auch als Streckmetall-, Drahtgewebeeinlagen oder dergleichen ausgebildet sein können. Die Stahlringeinlagen verlaufen dabei etwa parallel der Innen- oder Außenflächen. Der durch die Verstärkungseinlagen erreichte Zuwachs an Stabilität ist vielfach jedoch nicht ausreichend.

Aufgabe der Erfindung ist es daher, eine Flanschdichtung nach dem Oberbegriff des Anspruchs 1 zu schaffen, die es ermöglicht, Fluchtfehler auszugleichen und dabei stabil ist.

Diese Aufgabe wird durch die Merkmale des Anspruchs 1 gelöst.

Hierdurch wird eine Flanschdichtung geschaffen, die als ringförmige Verstärkungseinlage ein räumliches Tragwerk integriert. Aufgrund des Welligkeitsprofils besitzt die Verstärkungseinlage eine Wellenform, die zu einem elastischen, jedoch für die Stabilitätsansprüche der Flanschdichtungen festen Ringaufbau führt. Die räumlich gekrümmten Flächen der Verstärkungseinlage machen die Flanschdichtung außerordentlich druckfest und verwindungsstabil. Aus dem Anstieg der Wellenhöhe mit ansteigender Keilhöhe folgt eine Art Sandwichanordnung für eine gleichmäßige flächige Belastbarkeit der Flanschdichtung.

Vorzugsweise weist die Verstärkungseinlage eine Flachlage im Bereich einer Keilspitze eines jeweiligen Ringes auf, wodurch eine flächige Verstärkung im schmalsten Bereich der Ringe ausgebildet wird. Das Welligkeitsprofil ist ferner vorzugsweise symmetrisch zu einer mittleren Ringquerschnittsebene ausgebildet, um die Ringe mit einer gleichmäßig wirkenden Verstärkungseinlage im keilförmigen Umfangsverlauf auszustatten.

Vorzugsweise ist das Welligkeitsprofil der Verstärkungseinlage angepasst an ein Keilprofil der Ringe. Der Anstieg der Wellenhöhe der ringförmigen Verstärkungseinlage mit einem keilförmig verlaufenden Welligkeitsprofil kann an eine Keilform der Ringe der Flanschdichtung angepasst sein. Eine Bogenlänge und Bogenhöhe des Welligkeitsprofils ist in Abhängigkeit einer Keilhöhe der Ringe wählbar. Vorzugsweise werden Oberwellen ausgebildet mit einer Ausrichtung der Wellenberge bzw. Bogenscheitelpunkte in einer Ebene im Wesentlichen parallel zur Außenfläche eines Ringes. Die Oberwellen erstrecken sich dabei vorzugsweise von einer Grundfläche, die Flachstücke zwischen den Oberwellen ausbildet. Die Grundfläche ist vorzugsweise im Wesentlichen parallel zur Innenfläche eines Ringes angeordnet.

Die Verstärkungseinlage kann aus verschiedenen metallischen Materialien bestehen. Besonders bevorzugt sind Stahl, Aluminium, Metalllegierungen oder Guss.

Weitere Ausgestaltungen der Erfindung sind der nachfolgenden Beschreibung und den Unteransprüchen zu entnehmen.

Die Erfindung wird nachstehend anhand des in den beigefügten Abbildungen dargestellten Ausführungsbeispiels der Erfindung näher erläutert.
Fig. 1 zeigt schematisch eine perspektivische Ansicht einer ringförmigen Flanschdichtung bei maximalem Spreizwinkel,
Fig. 2 zeigt schematisch im Schnitt die Flanschdichtung gemäß Fig. 1,
Fig. 3 zeigt schematisch in Draufsicht die ringförmige Verstärkungseinlage der Flanschdichtung gemäß Fig. 2,
Fig. 4 zeigt schematisch eine Ansicht der ringförmigen Verstärkungseinlage,
Fig. 5 zeigt schematisch die ringförmige Verstärkungseinlage gemäß Fig. 2,
Fig. 6 zeigt schematisch ein Diagramm mit einer Verteilung von Oberwellen an der Verstärkungseinlage.

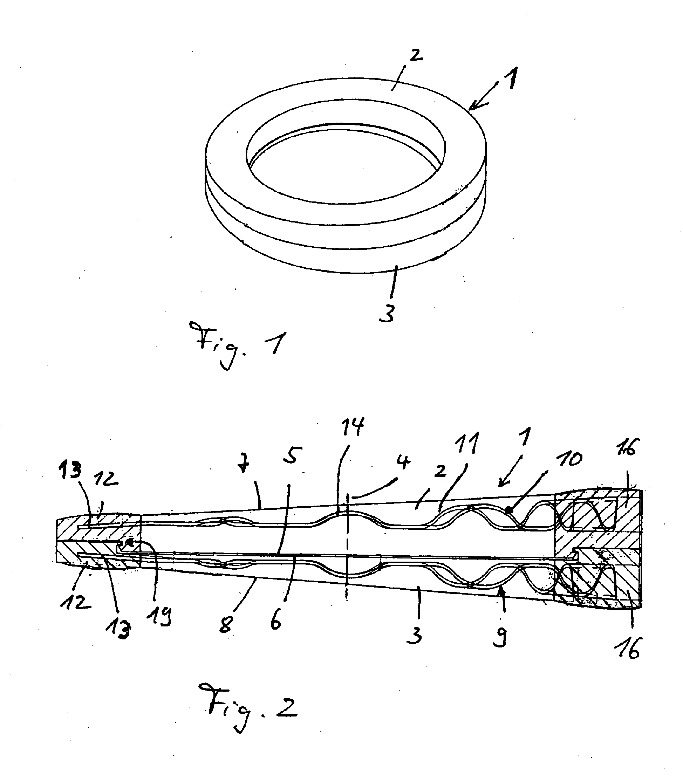

Fig. 1 und Fig. 2 zeigen eine ringförmige Flanschdichtung 1, die zwei Ringe 2, 3 aus einem gummielastischen Werkstoff umfasst. Die Ringe 2, 3 sind quer zur Ringachse 4 keilfömig ausgebildet und grenzen an einander zugekehrten Seiten senkrecht zur Ringachse über plane Flächen 5, 6 aneinander und stehen dort verdrehbar miteinander in Eingriff. Die Flächen 5, 6 bilden dabei Innenflächen der Ringe 2, 3. Die diesen Flächen 5, 6 eines Ringes 2, 3 jeweils gegenüberliegende Fläche 7, 8 bilden Außenflächen der Ringe 2, 3. Die Flächen 5, 6 der Innenflächen verlaufen vorzugsweise parallel einer Verbindungsebene der Ringe 2, 3 zur Ausbildung der Flanschdichtung 1, während die Flächen 7, 8 der Außenflächen dazu Keilflanken bilden.

Die Ringe 2, 3 weisen jeweils eine ringförmige Verstärkungseinlage 9, 10 auf, die entlang mindestens eines Umfangsabschnitts in einem Bereich steigender Keilhöhe ein Welligkeitsprofil 11 mit einer steigenden Wellenhöhe aufweisen. Das Welligkeitsprofil 11 ist vorzugsweise derart ausgebildet, dass die Verstärkungseinlage 9, 10 im Bereich einer Keilspitze 12 des jeweiligen Ringes 2, 3 eine Flachlage 13 besitzt, gegenüber der die Wellenhöhen bis zu einer maximalen Wellenhöhe im Bereich der Keilbasis 16 hin ansteigen. Die Verstärkungseinlage 9, 10 ist in den gummielastischen Werkstoff der Ringe 2, 3 integriert, wobei randseitig der Ringe 2, 3 ein Überstand an unverstärktem gummielastischem Werkstoff vorgesehen sein kann.

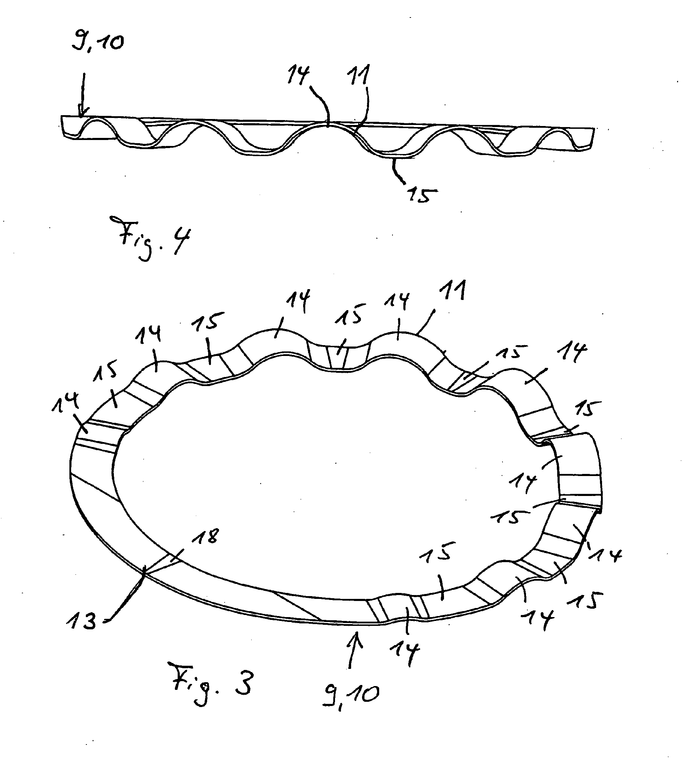

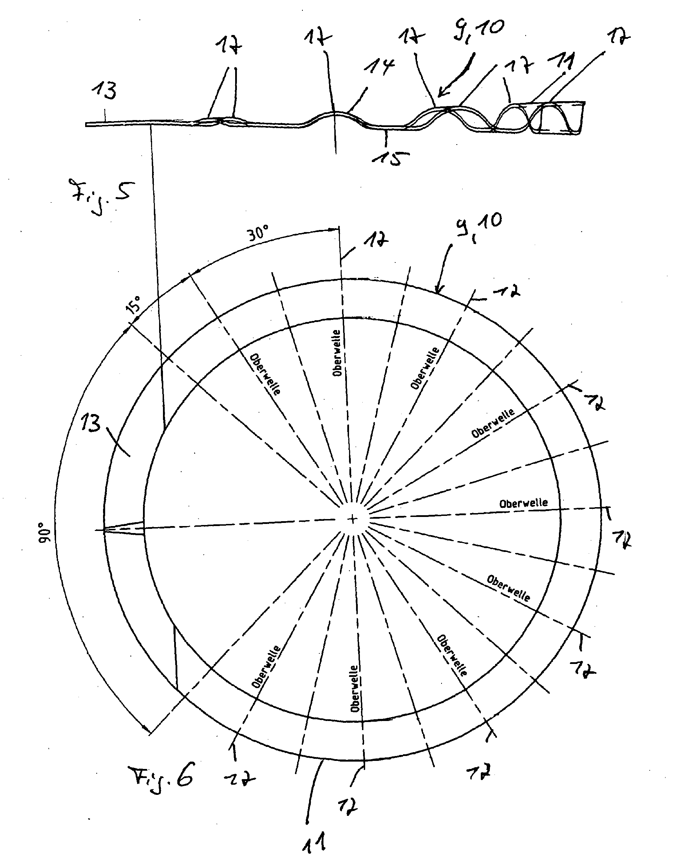

Die Flachlage 13 erstreckt sich über einen Umfangsabschnitt von 80 bis 100° bezogen auf den Ringmittelpunkt. Gemäß Fig. 6 beträgt der Umfangsabschnitt beispielsweise 90°. Das Welligkeitsprofil 11 verläuft ferner vorzugsweise zu einer mittleren Ringquerschnittsebene symmetrisch, wie Fig. 2 bis Fig. 6 zeigen.

Die ringförmige Verstärkungseinlage 9, 10 besitzt vorzugsweise ein Welligkeitsprofil 11 mit einem langwelligen Anteil im Bereich größerer Keilhöhe und einem kurzwelligen Anteil im Bereich kleinerer Keilhöhe. Dies bedeutet, dass die Bögen 14 der Wellen des Welligkeitsprofils 11 unterschiedlich weit gespannt sind. Hinzu kommt, dass das Welligkeitsprofil 11 vorzugsweise nur von Oberwellen gebildet ist, wie insbesondere Fig. 2 und Fig. 5 zeigen. Diese Oberwellen sind über Flachstücke 15 voneinander beabstandet. Die Bögen 14 der Wellenberge der Oberwellen sind jeweils der Außenfläche 7, 8 des Rings 2, 3 zugewandt. Die Scheitelpunkte 17 der Bögen 14 der Oberwellen eines Rings 2, 3 liegen vorzugsweise in einer Ebene parallel der Außenfläche 7, 8 des jeweiligen Rings 2, 3.

Die Wellenberge des Welligkeitsprofils 11 folgen vorzugsweise dem Anstieg der Keilhöhe stetig. Im Bereich der Keilbasis 16 sind dann die Bögen 14 des Welligkeitsprofils 11 angeordnet, die die maximale Wellenhöhe aufweisen.

Die Flachstücke 15 zwischen den Bögen 14 der Wellenberge des Welligkeitsprofils 11 liegen vorzugsweise in einer Ebene parallel der Innenfläche 5, 6 des jeweiligen Rings 2, 3. Die Flachstücke 15 sind dann Teilstücke einer ebenen Grundfläche, gegenüber der sich die Bögen 14 des Welligkeitsprofils 11 erheben.

Fig. 6 zeigt die gemäß dem Ausführungsbeispiel vorgesehenen neun Oberwellen mit Bögen 14. Die Scheitelpunkte 17 der Oberwellen sind umfänglich in gleichen Abständen benachbart zueinander angeordnet. Beispielsweise liegen zwei Scheitelpunkte 17 jeweils 30° zueinander beabstandet, bezogen auf den Ringmittelpunkt bzw. die Ringachse 4 der ringförmigen Verstärkungseinlage 9, 10. Die zur Keilbasis 16 hin höheren und breiteren Bögen 14 der Wellenberge werden durch kürzere Flachstücke 15 beabstandet als die tieferen und kürzeren Bögen 14 der Wellenberge benachbart zur Flachlage 13. Eine Markierung 18 kann den mittigen Bereich der Flachlage 13 anzeigen. Die Anzahl der Oberwellen des Welligkeitsprofils 11 ist wählbar und richtet sich insbesondere nach dem Durchmesser der Flanschdichtung 1.

Als Werkstoff für die metallische Verstärkungseinlage 9, 10 ist vorzugsweise Stahl, Aluminium, Metalllegierung oder Guss vorgesehen.

Die beiden Ringe 2, 3 stehen miteinander in Schnappeingriff 19, um die Ringe 2, 3 drehbar aneinander zu befestigen. Zwischen den beiden Ringen 2, 3 kann ein nicht dargestellter O-Ring aufgenommen sein.

## Patentansprüche

1. Ringförmige Flanschdichtung (1) aus einem gummielastischen Werkstoff, die zwei je eine ringförmige Verstärkungseinlage (9, 10) aufweisende Ringe (2, 3) umfasst, die quer zur Ringachse (4) keilförmig ausgebildet sind und an einander zugekehrten Seiten (5, 6) senkrecht zur Ringachse (4) über plane Flächen aneinander grenzen und dort verdrehbar miteinander in Eingriff stehen, **dadurch gekennzeichnet, dass** die ringförmige Verstärkungseinlage (9, 10) entlang mindestens eines Umfangsabschnitts in einem Bereich steigender Keilhöhe ein Welligkeitsprofil (11) mit einer steigenden Wellenhöhe aufweist.

2. Flanschdichtung nach Anspruch 1, **dadurch gekennzeichnet, dass** die Verstärkungseinlage (9, 10) im Bereich einer Keilspitze (12) des jeweiligen Ringes (2, 3) eine Flachlage (13) besitzt, gegenüber der die Wellentiefe bis zur maximalen Wellentiefe hin ansteigt.

3. Flanschdichtung nach Anspruch 2, **dadurch gekennzeichnet, dass** die Flachlage (13) sich über einen Umfangsabschnitt von 80 bis 100° bezogen auf den Ringmittelpunkt erstreckt.

4. Flanschdichtung nach einem der Ansprüche 1 bis 3, **dadurch gekennzeichnet, dass** das Welligkeitsprofil (11) zu einer mittleren Ringquerschnittsebene symmetrisch verläuft.

5. Flanschdichtung nach einem der Ansprüche 1 bis 4, **dadurch gekennzeichnet, dass** das Welligkeitsprofil (11) einen langwelligen Anteil im Bereich größerer Keilhöhe und einen kurzwelligen Anteil im Bereich kleinerer Keilhöhe umfasst.

6. Flanschdichtung nach einem der Ansprüche 1 bis 5, **dadurch gekennzeichnet, dass** das Welligkeitsprofil (11) von Oberwellen gebildet ist.

7. Flanschdichtung nach Anspruch 6, **dadurch gekennzeichnet, dass** die Oberwellen über Flachstücke (15) voneinander beabstandet sind.

8. Flanschdichtung nach Anspruch 6 oder 7, **dadurch gekennzeichnet, dass** die Wellenberge der Oberwellen jeweils einer Außenfläche (7, 8) des Rings (2, 3) zugewandt sind.

9. Flanschdichtung nach einem der Ansprüche 1 bis 8, **dadurch gekennzeichnet, dass** die Wellenberge des Welligkeitsprofils (11) in einer Ebene parallel der Außenfläche (7, 8) des jeweiligen Rings (2, 3) liegen.

10. Flanschdichtung nach einem der Ansprüche 1 bis 9, **dadurch gekennzeichnet, dass** die Wellenberge des Welligkeitsprofils (11) dem Anstieg der Keilhöhe folgend mit einer ansteigenden Höhe der Wellenberge ausgebildet sind.

11. Flanschdichtung nach einem der Ansprüche 1 bis 10, **dadurch gekennzeichnet, dass** Flachstücke (15) zwischen Wellenbergen des Welligkeitsprofils (11) in einer Ebene parallel der Innenfläche (5, 6) des jeweiligen Rings (2, 3) liegen.

12. Flanschdichtung nach einem der Ansprüche 1 bis 11, **dadurch gekennzeichnet, dass** die metallische Verstärkungseinlage (9, 10) aus Stahl, Aluminium, Metalllegierung oder Guss besteht.

13. Flanschdichtung nach einem der Ansprüche 1 bis 12, **dadurch gekennzeichnet, dass** die beiden Ringe (2, 3) miteinander in Schnappeingriff (19) stehen.

14. Flanschdichtung nach einem der Ansprüche 1 bis 13, **dadurch gekennzeichnet, dass** zwischen den beiden Ringen (2, 3) ein O-Ring aufgenommen ist.

## Claims

1. Ring-shaped flange gasket (1) produced from a rubbery-elastic material, said flange gasket comprising two rings (2, 3), each having a ring-shaped reinforcing insert (9, 10), said rings being formed in a wedge-shaped manner transversely relative to the ring axis (4) and, at sides (5, 6) that face each other, adjoining one another at right angles to the ring axis (4) by means of planar surfaces and there being in engagement with one another so as to be rotatable, **characterized in that** along at least one circumferential section, the ring-shaped reinforcing insert (9, 10) has a wave profile (11) with an increasing wave height in a region of increasing wedge height.

2. Flange gasket according to Claim 1, **characterized in that** in the region of a wedge tip (12) of the respective ring (2, 3) the reinforcing insert (9, 10) has a flatness (13), with respect to which the wave depth increases to maximum wave depth.

3. Flange gasket according to Claim 2, **characterized in that** the flatness (13) extends over a circumferential section of 80 to 100° with reference to the central point of the ring.

4. Flange gasket according to one of Claims 1 to 3, **characterized in that** the wave profile (11) extends symmetrically to a central cross-sectional plane of the ring.

5. Flange gasket according to one of Claims 1 to 4, **characterized in that** the wave profile (11) comprises a portion of longer wave length in the region of greater wedge height and a portion of shorter wave length in the region of smaller wedge height.

6. Flange gasket according to one of Claims 1 to 5, **characterized in that** the wave profile (11) is formed by harmonic waves.

7. Flange gasket according to Claim 6, **characterized in that** the harmonic waves are spaced apart by flat pieces (15).

8. Flange gasket according to Claim 6 or 7, **characterized in that** each wave crest of the harmonic waves faces an outer surface (7, 8) of the ring (2, 3).

9. Flange gasket according to one of Claims 1 to 8, **characterized in that** the wave crests of the wave profile (11) are in a plane parallel to the outer surface (7, 8) of the respective ring (2, 3).

10. Flange gasket according to one of Claims 1 to 9, **characterized in that** the wave crests of the wave profile (11), following the increase in the wedge height, are formed with an increasing height of the wave crests.

11. Flange gasket according to one of Claims 1 to 10, **characterized in that** flat pieces (15) between wave crests of the wave profile (11) are in a plane parallel to the inner surface (5, 6) of the respective ring (2, 3).

12. Flange gasket according to one of Claims 1 to 11, **characterized in that** the metal reinforcing insert (9, 10) is produced from steel, aluminium, metal alloy or cast iron.

13. Flange gasket according to one of Claims 1 to 12, **characterized in that** the two rings (2, 3) are snap-connected together (19).

14. Flange gasket according to one of Claims 1 to 13, **characterized in that** an O-ring seal is accommodated between the two rings (2, 3).

## Revendications

1. Garniture d'étanchéité de bride annulaire (1) en matériau élastomère, qui comprend deux bagues (2, 3) présentant chacune un insert de renforcement annulaire (9, 10), qui sont réalisées en forme de cale transversalement à l'axe des bagues (4) et qui sont adjacentes l'une à l'autre par des faces planes sur des côtés en regard l'un de l'autre (5, 6) et perpendiculairement à l'axe des bagues (4), et qui sont en prise l'une avec l'autre de manière rotative, **caractérisée en ce que** l'insert de renforcement annulaire (9, 10) présente, le long d'au moins une portion périphérique dans une région de hauteur de cale croissante, un profil d'ondulation (11) avec une hauteur d'ondulation croissante.

2. Garniture d'étanchéité de bride selon la revendication 1, **caractérisée en ce que** l'insert de renforcement (9, 10) possède, dans la région d'une pointe de cale (12) de la bague respective (2, 3), une zone plane (13) par rapport à laquelle la profondeur d'ondulation augmente jusqu'à la profondeur d'ondulation maximale.

3. Garniture d'étanchéité de bride selon la revendication 2, **caractérisée en ce que** la zone plane (13) s'étend sur une portion périphérique de 80 à 100° par rapport au centre de la bague.

4. Garniture d'étanchéité de bride selon l'une quelconque des revendications 1 à 3, **caractérisée en ce que** le profil d'ondulation (11) s'étend symétriquement par rapport à un plan médian de section transversale de la bague.

5. Garniture d'étanchéité de bride selon l'une quelconque des revendications 1 à 4, **caractérisée en ce que** le profil d'ondulation (11) comprend une proportion d'ondes longues dans la région de plus grande hauteur de cale, et une proportion d'ondes courtes dans la région de plus petite hauteur de cale.

6. Garniture d'étanchéité de bride selon l'une quelconque des revendications 1 à 5, **caractérisée en ce que** le profil d'ondulation (11) est formé par des ondes supérieures.

7. Garniture d'étanchéité de bride selon la revendication 6, **caractérisée en ce que** les ondes supérieures sont espacées les unes des autres par des parties plates (15).

8. Garniture d'étanchéité de bride selon la revendication 6 ou 7, **caractérisée en ce que** les sommets d'ondulation des ondes supérieures sont à chaque fois tournés vers une surface extérieure (7, 8) de la bague (2, 3).

9. Garniture d'étanchéité de bride selon l'une quelconque des revendications 1 à 8, **caractérisée en ce que** les sommets d'ondulation du profil d'ondulation (11) se situent dans un plan parallèlement à la surface extérieure (7, 8) de la bague respective (2, 3).

10. Garniture d'étanchéité de bride selon l'une quelconque des revendications 1 à 9, **caractérisée en ce que** les sommets d'ondulation du profil d'ondulation (11) sont réalisés de manière à suivre la montée de la hauteur de cale avec une hauteur croissante des sommets d'ondulation.

11. Garniture d'étanchéité de bride selon l'une quelconque des revendications 1 à 10, **caractérisée en ce que** des parties plates (15) sont situées entre des sommets d'ondulation du profil d'ondulation (11) dans un plan parallèlement à la surface interne (5, 6) de la bague respective (2, 3).

12. Garniture d'étanchéité de bride selon l'une quelconque des revendications 1 à 11, **caractérisée en ce que** l'insert de renforcement métallique (9, 10) se compose d'acier, d'aluminium, d'un alliage métallique ou de fonte.

13. Garniture d'étanchéité de bride selon l'une quelconque des revendications 1 à 12, **caractérisée en ce que** les deux bagues (2, 3) sont en prise par encliquetage l'une avec l'autre (19).

14. Garniture d'étanchéité de bride selon l'une quelconque des revendications 1 à 13, **caractérisée en ce qu'**un joint torique est reçu entre les deux bagues (2, 3).
